# EUROPÄISCHE PATENTSCHRIFT

(11) **EP 4 174 428 B1**
(45) Veröffentlichungstag und Bekanntmachung des Hinweises auf die Patenterteilung: **06.12.2023**
(21) Anmeldenummer: 22202182.6
(22) Anmeldetag: 18.10.2022
(51) Int. Cl.: F28D 1/047, F28F 9/26, F28F 21/06

(54) **VORRICHTUNG ZUM KLIMATISIEREN EINES RAUMES MIT EINEM WÄRMETAUSCHERMODUL**
DEVICE FOR AIR CONDITIONING A ROOM COMPRISING A HEAT EXCHANGER MODULE
DISPOSITIF DE CLIMATISATION D'UNE PIÈCE COMPRENANT UN MODULE D'ÉCHANGEUR DE CHALEUR

(30) Priorität: 02.11.2021 AT 508622021
(43) Veröffentlichungstag der Anmeldung: 03.05.2023
(73) Patentinhaber: KE KELIT GmbH, 4020 Linz (AT)
(72) Erfinder: PÖCHHACKER, Martin, 3251 Purgstall (AT)
(74) Vertreter: Hübscher & Partner Patentanwälte GmbH

(56) Entgegenhaltungen:
- EP-A2- 2 679 923
- WO-A1-2004/104466
- WO-A1-2006/103432
- CN-A- 112 161 490
- JP-A- H1 019 416

## Beschreibung

Die Erfindung bezieht sich auf eine Vorrichtung zum Klimatisieren eines Raumes mit einem Wärmetauschermodul das wenigstens eine von einem Temperierfluid durchströmbare, mäanderförmig angeordnete Rohrschlange mit mehreren parallel verlaufenden Rohrlängsabschnitten umfasst, die über Verbindungsabschnitte verbunden sind, wobei das Rohr im Bereich der Rohrlängsabschnitte in Rohraufnahmen wenigstens einer quer zur Längsrichtung der Rohrlängsabschnitte verlaufenden Halteschiene eingesetzt ist.

Zum Festlegen der Form der Rohrschlange, die eine ebenes Flächentemperiermodul bildet, werden Halteschienen verwendet, in welche die geraden Rohrabschnitte punktuell eingesetzt werden (EP3722681 A1, EP 2679923 A). Im Zusammenhang mit der Klimatisierung von Räumen mithilfe von Flächenheizungen sind diverse Halteschienen für die das Wärmeträgerfluid führenden Rohrleitungen bekannt. Die Wärmetauschermodule, also Halteschienen samt Rohrleitung werden beispielsweise in eine auszuhärtende Betonvergussmasse eingebettet oder unter einer Decke aufgehängt. Daraus ergeben sich maximal handzuhabende Rohrschlangenabmaße, die im Wesentlichen von maximal erlaubten Packmaßen bzw. Flächenmaßen bestimmt werden. An einer Baustelle sind dann je nach Bedarf zwei oder mehrere Rohrschlangen zum Wärmetauschermodul zusammenzuschließen.

Anschlussvorrichtung, nämlich Fittings für Kunststoffrohre bzw. Verbundrohre sind beispielsweise aus der WO2011097659 A1 und der AT 410 706 B bekannt. Derartige Fittings weisen einen das Kunststoffrohr aufnehmenden Anschlussnippel auf, der einen sich gegen das freie Nippelende hin erweiternden Außenkonus bildet, zwischen dem und einem axialen Anschlag ein auf den Außenkonus aufschiebbarer Spreizring mit nach außen abstehenden Rückhaltekrallen vorgesehen ist, der über einen Stützring am axialen Anschlag des Anschlussnippels abgestützt ist, und mit einer an einem Anschlagflansch des Anschlussnippels zugfest angreifenden, das auf den Anschlussnippel aufgeschobene Kunststoffrohr umschließenden Hülse.

Bei der Montage wird das Kunststoffrohr auf einen Anschlussnippel aufgeschoben, der im Bereich eines Außenkonus einen Spreizring mit nach außen abstehenden Rückhaltekrallen trägt, sodass beim Aufschieben das Kunststoffrohr über den sich im verjüngten Bereich des Außenkonus befindlichen Spreizring hinweggleitet. Beim Versuch, das Kunststoffrohr von Anschlussmittel abzuziehen, wird der Spreizring über seine abstehenden Rückhaltekrallen mitgenommen und auf den Außenkonus aufgeschoben. Die damit verbundene Spreizung des Spreizringes bedingt ein Festhalten des Kunststoffrohres, das von einer zugfest mit einem Anschlagflansch des Anschlussnippels verbundenen Hülse umschlossen wird, sodass das Kunststoffrohr dem gespreizten Spreizring nicht ausweichen kann und zwischen dem Spreizring und der als Widerlager wirkenden Hülse festgehalten wird.

Aus der WO2011097659 A1 ist es bekannt den Spreizring über einen Stützring am axialen Anschlag des Anschlussnippels abzustützen, wobei zwischen Spreizring und Stützring ein gummielastischer Federring angeordnet ist und wobei Spreizring, Stützring und Federring schubfest untereinander verbunden sind.

Durch die in axiale Richtung federnde Abstützung des Spreizringes am Anschlag des Anschlussnippels kann der Spreizring beim Aufschieben des Kunststoffrohres auf den Anschlussnippel durch das Kunststoffrohr gegen die Federkraft der Abstützung zumindest soweit vom Außenkonus abgeschoben werden, dass der Spreizring im Wesentlichen innerhalb des Nippelumfanges zu liegen kommt und daher keinen erhöhten Schiebewiderstand für das Kunststoffrohr darstellt. Der Spreizring stützt sich dabei über den gummielastischen Federring und den am Anschlag des Anschlussnippels anliegenden Stützring ab, wobei Spreizring, Federring und Stützring einen schubfesten Verbundkörper bilden, der gemeinsam auf den Außenkonus aufgesetzt werden bzw. von diesem abgenommen werden kann. Da die gegenüber dem Federring aus einem steifen, nicht gummielastischen, Material, wie beispielsweise einem harten Kunststoff, einem Metall od. wirkungsgleichem, gefertigten Spreiz- und Stützringe den gummielastischen Federring zwischen sich schubfest aufnehmen, wird auch ein Verlagern des Federringes aus seiner Aufnahmenut in den Spalt zwischen Anschlussnippel und Hülse beim Aufschieben des Kunststoffrohres auf den Anschlussnippel sicher verhindert, womit somit stets eine definierte Anpresskraft der Rückhaltekrallen gegen das Rohrinnere gewährleistet ist. Beim Versuch, das Kunststoffrohr vom Anschlussnippel abzuziehen, unterstützt die in axialer Richtung wirksame Federring das Aufschieben des Spreizringes auf den Außenkonus, womit die entsprechend vorstehenden Rückhaltekrallen eine sichere Mitnahme des Spreizringes mit dem Kunststoffrohr erzwingen, und zwar mit der Folge, dass die auf das Kunststoffrohr wirksamen Klemmkräfte zwischen dem Spreizring und der Hülse mit zunehmendem Abzug größer werden.

Der Erfindung liegt die Aufgabe zugrunde eine Möglichkeit zu schaffen, an sich starre und großflächige Rohrsysteme möglichst kompakt transportieren zu können, ohne dabei nach dem Transport aufwändige Installationsarbeiten nötig zu machen.

Die Erfindung löst die gestellte Aufgabe dadurch, dass das Wärmetauschermodul aus wenigstens zwei Rohrschlangen zusammengesetzt ist, deren aneinander angeschlossene Rohrenden im Bereich eines gemeinsamen Rohrlängsabschnittes über ein Fitting miteinander verbunden sind, das ein Drehlager mit rohrlängsrichtungsparalleler Drehachse für die aneinander angeschlossenen Rohrschlangen bildet. Damit können beide Rohrschlangen zum Transport bzw. zur Zwischenlagerung platzsparend zusammengelegt werden. Das Zusammen- bzw. auseinanderfalten der beiden im Wesentlichen ebenen, je einen Wärmetauschermodulabschnitt bildenden Rohrschlangen erfolgt dabei um die Drehachse, die mit der Rohrlängsrichtung der aneinander zu einem gemeinsamen Rohrlängsabschnitt angeschlossenen Rohrenden zusammenfällt. Große Wärmetauschermodule können damit leichter transportiert und verarbeitet werden. Das Wärmetauschermodul muss an einer Baustelle nur aufgefaltet sowie an ein Netz angeschlossen und nicht aufwändig zusammengebaut werden.

Für kompakte Transportmaße ist es von Vorteil, wenn die Rohrschlangen um die Drehachse des Fittings um zumindest annähernd 180°, insbesondere wenigstens 170 bis 180°, zwischen einer auseinandergebreiteten Montagelage und einer zusammengelegten Transportlage verlagerbar sind.

Von Vorteil ist es auch, wenn das Fitting zwei je ein Rohrende einer Rohrschlange aufnehmende Anschlussnippel aufweist, wobei auf jeden Anschlussnippel ein Rohrende unter Zwischenlage einer Dichtung, insbesondere eines Dichtringes, aufgesetzt ist. Zwischen den beiden in entgegengesetzte Richtungen weisenden Anschlussnippeln kann ein fluiddichtes Drehlager angeordnet sein.

Besonders einfache Konstruktionsverhältnisse ergeben sich aber, wenn das Fitting in einer aus der WO2011097659 A1 und/oder der AT 410 706 B bekannten Weise aufgebaut ist und der Fitting zwei je ein Rohrende einer Rohrschlange aufnehmende Anschlussnippel aufweist, wobei die Rohrenden auf den Anschlussnippeln mittels je wenigstens einer Klemmvorrichtung abzugsgesichert sind, die um die zugeordnete Anschlussnippellängsachse frei drehbar im Fitting gelagert ist. Durch die gemeinsame freie Drehbarkeit der Rohrenden mit den zugeordneten Klemmvorrichtungen bildet das Fitting ein Drehscharnier, ohne ein gesondertes fluiddichtes Drehlager vorsehen zu müssen.

Vorzugsweise weist jeder Anschlussnippel einen sich gegen das freie Nippelende hin erweiternden Außenkonus auf, auf den ein auf den Außenkonus aufschiebbarer, eine Anzugssicherung bildender Spreizring mit nach außen abstehenden Rückhaltekrallen vorgesehen ist. Dazu empfiehlt es sich, wenn zwischen dem Spreizring und einem Stützring, der sich an einem dem freien Nippelende abgewandten axialen Anschlag des Anschlussnippels abstützt, ein gummielastischer Federring angeordnet ist. Damit kann das vom Fitting ausgebildete Drehlager praktisch spielfrei gestellt werden, da die Rückhaltekrallen vom Federring stets unter Vorspannung radial gegen das Rohrende angestellt sind. Stehen die Rohre nicht unter Druck, ist das Drehlager praktisch freigestellt, also ein freies Falten der Rohrschlangen möglich. Stehen die Rohre unter dem Druck eines durch sie strömenden Temperierfluids, ist das Drehlager gehemmt, also kein freies Falten der Rohrschlangen möglich, da die aus dem Druck resultierenden Axialkräfte die zwischen Außenkonus und Spreizring wirkenden Reibkräfte erhöhen.

Sind die Halteschienen der aneinander angeschlossenen Rohrschlangen zueinander auf Lücke versetzt angeordnet, und greifen die einander zugewandten schienenendseitigen Rohraufnahmen der beiden aneinander angeschlossenen Rohrschlangen unter Ausbildung eines Scharniers am Rohrlängsabschnitt mit dem Fitting an, so können die beiden Rohrschlangen nicht nur vorteilhaft zwischen einer auseinandergebreiteten Montagelage und einer zusammengelegten Transportlage verlagert, insbesondere um die Drehachse verschwenkt werden. Zufolge dieser Maßnahme können zudem beim Falten auf das Fitting und die Rohrenden einwirkende Biegemomente vermieden werden, welche gegebenenfalls Undichtheiten des Fittings mit sich bringen könnten.

Ein vorteilhaftes Wechseln zwischen einer Montagelage und einer zusammengelegten Transportlage ergibt sich ebenfalls, wenn jede Rohrschlange in wenigstens eine Halteschiene eingesetzt ist, und wenigstens eine Halteschiene einer Rohrschlange mit ihrer endabschnittsseitigen Rohraufnahe unter Ausbildung eines Scharniers am Rohrlängsabschnitt mit dem Fitting angreift, wobei die Halteschienen benachbarter Rohrschlangen zueinander auf Lücke versetzt sind. Um darüber hinaus etwaige auf den Fitting einwirkende Biegemomente weiter zu reduzieren, wird vorgeschlagen, dass wenigstens eine Halteschiene einer Rohrschlange mit ihrer endabschnittsseitigen Rohraufnahe unter Ausbildung eines Scharniers am Rohrlängsabschnitt mit dem Fitting der benachbarten Rohrschlange angreift. Dies bedeutet, dass je Rohrschlange wenigstens eine Halteschiene existiert, die zwei Rohrschlangen zugeordnet ist, in deren Aufnahmen somit beide Rohrschlangen eingesetzt sind. Auf diese Weise erfolgt einerseits eine gegenseitige Sicherung der Rohrschlangen untereinander und andererseits eine Sicherung an beiden Seiten des Fittings.

In der Zeichnung ist der Erfindungsgegenstand beispielsweise dargestellt. Es zeigen
- Fig. 1: ein Wärmetauschermodul mit den Rohrschlangen in Montagelage in Draufsicht,
- Fig. 2: das ein Wärmetauschermodul mit den Rohrschlangen in zusammengelegter Transportlage in Draufsicht und
- Fig. 3: das Detail III aus Fig. 1 und 2, nämlich das Fitting in einem vergrößerten Querschnitt.

Die Vorrichtung zum Klimatisieren eines Raumes weist ein Wärmetauschermodul 1 auf, welches wenigstens eine von einem Temperierfluid durchströmbare, mäanderförmig angeordnete Rohrschlange 2 mit mehreren parallel verlaufenden Rohrlängsabschnitten 3 umfasst. Die Rohrlängsabschnitte 3 sind über bogenförmige, insbesondere halbkreisförmige, Verbindungsabschnitte 4 verbunden. Die Rohrschlange 2 ist im Bereich der Rohrlängsabschnitte 3 in Rohraufnahmen 5 mehrerer quer zur Längsrichtung der Rohrlängsabschnitte 3 verlaufender Halteschienen 6 eingesetzt.

Erfindungsgemäß ist das Wärmetauschermodul 1 aus wenigstens zwei Rohrschlangen 2 zusammengesetzt, deren aneinander angeschlossene Rohrenden 7 im Bereich eines gemeinsamen Rohrlängsabschnittes 3 über einen Fitting 8 miteinander strömungsverbunden sind. Das Fitting 8 bildet ein Drehlager mit rohrlängsrichtungsparalleler Drehachse 9 für die aneinander angeschlossenen Rohrschlangen 2. Die Drehachse 9 ist parallel zur Längsrichtung der anderen Rohrlängsabschnitte 3.

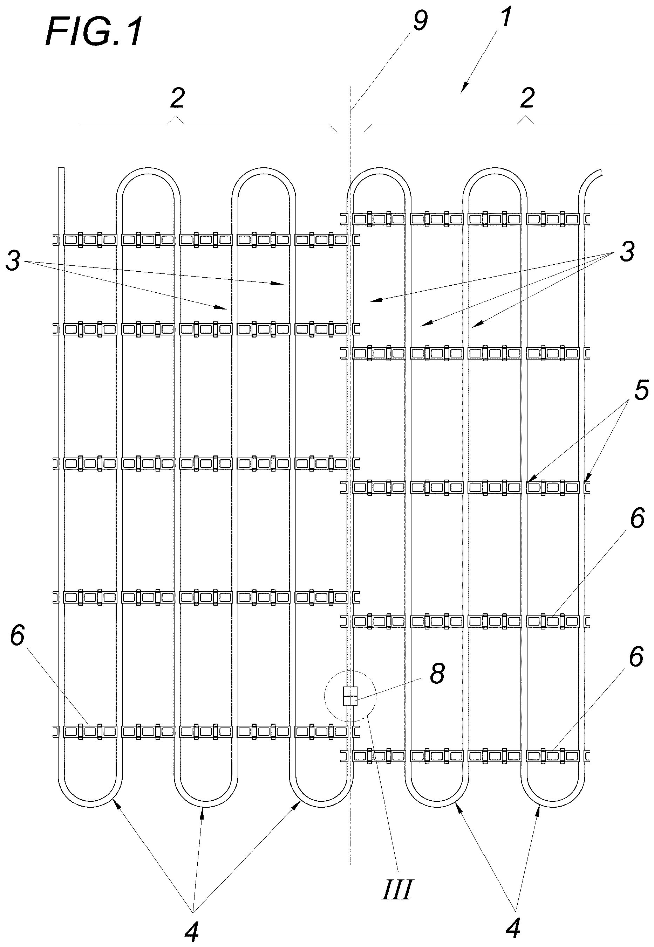

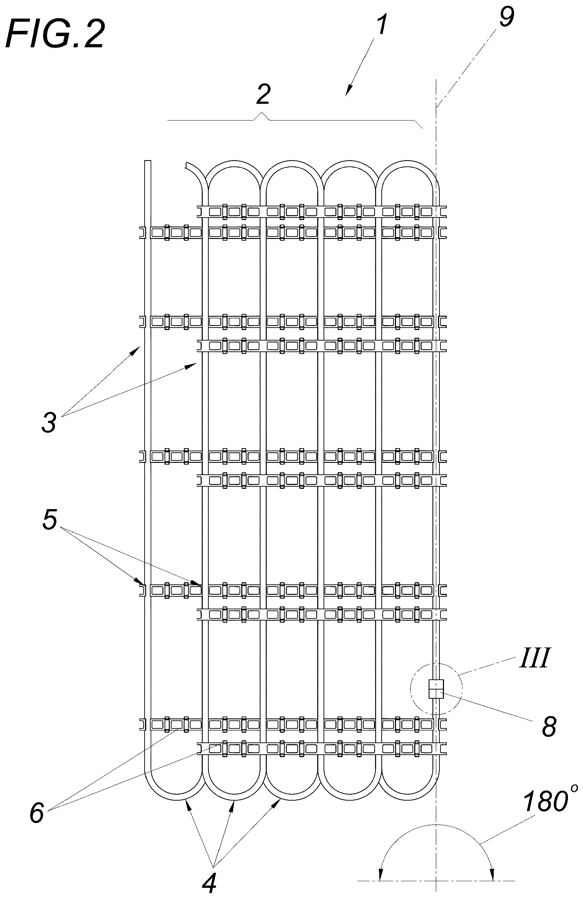

Die Halteschienen der aneinander angeschlossenen Rohrschlangen 2 sind in Längsrichtung der Rohrlängsabschnitte 3 zueinander auf Lücke versetzt angeordnet. Zudem greifen die einander zugewandten schienenendseitigen Rohraufnahmen 5 der beiden aneinander angeschlossenen Rohrschlangen unter Ausbildung eines Scharniers am Rohrlängsabschnitt mit dem Fitting an. Damit können die beiden Rohrschlangen zwischen einer auseinandergebreiteten Montagelage (Fig. 1) und einer zusammengelegten Transportlage (Fig. 2) verlagert, insbesondere um die Drehachse 9 verschwenkt werden, ohne Biegemomente auf das Fitting 8 auszuüben, welche zu Undichtheiten des Fittings 8 führen können.

Zudem sind die Rohrschlangen 2 um die Drehachse 9 des Fittings 8 um zumindest annähernd 180°, insbesondere wenigstens 170 bis 180°, zwischen einer auseinandergebreiteten Montagelage (Fig. 1) und einer zusammengelegten Transportlage (Fig. 2) verlagerbar.

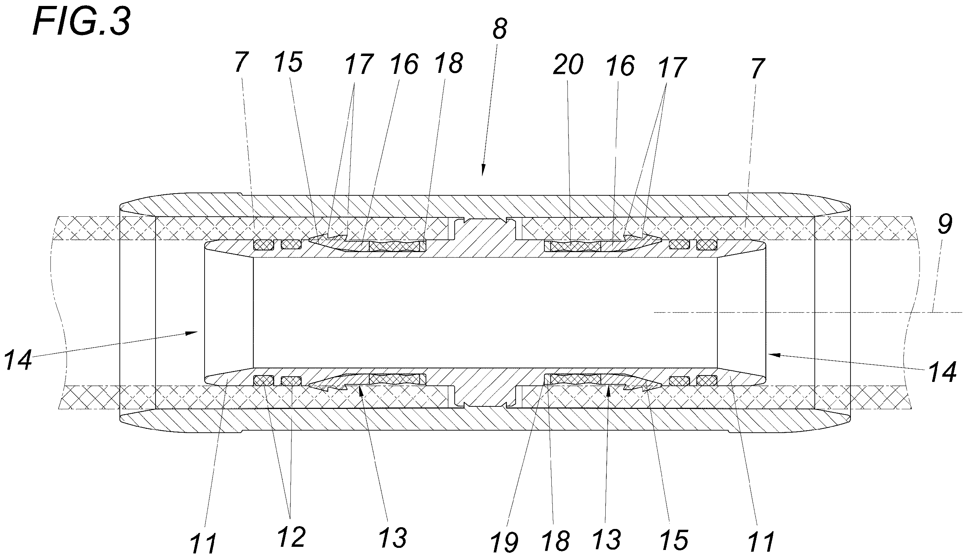

Gemäß dem Ausführungsbeispiel nach Fig. 3 weist der Fitting 8 zwei je ein Rohrende 7 einer Rohrschlange 2 aufnehmende Anschlussnippel 11 auf, wobei auf jeden Anschlussnippel 11 ein Rohrende 7 unter Zwischenlage einer Dichtung 12, insbesondere wenigstens eines Dichtringes, hier zwei Dichtringe, aufgesetzt ist. Zudem sind die die Rohrenden 7 auf den Anschlussnippeln 11 mittels je wenigstens einer Klemmvorrichtung 13 abzugsgesichert, welche Klemmvorrichtung 13 um die zugeordnete Anschlussnippellängsachse, die der Drehachse 9 entspricht, frei drehbar im Fitting 8 gelagert ist.

Die Anschlussnippel 8 weisen je einen sich gegen das freie Nippelende 14 hin erweiternden Außenkonus 15 aufweist, auf den ein auf den Außenkonus 15 aufschiebbarer, eine Abzugssicherung für das Rohr der Rohrschlange 2 bildender Spreizring 16 mit nach außen abstehenden Rückhaltekrallen 17 vorgesehen ist. Zwischen dem Spreizring 16 und einem Stützring 18, der sich an einem dem freien Nippelende 14 abgewandten axialen Anschlag 19 des Anschlussnippels 11 abstützt, ist ein gummielastischer Federring 20 angeordnet.

## Patentansprüche

1. Vorrichtung zum Klimatisieren eines Raumes mit einem Wärmetauschermodul (1), das wenigstens eine von einem Temperierfluid durchströmbare, mäanderförmig angeordnete Rohrschlange (2) mit mehreren parallel verlaufenden Rohrlängsabschnitten (3) umfasst, die über Verbindungsabschnitte (4) verbunden sind, wobei die Rohrschlange (2) im Bereich der Rohrlängsabschnitte (3) in Rohraufnahmen (5) wenigstens einer quer zur Längsrichtung der Rohrlängsabschnitte (3) verlaufenden Halteschiene (6) eingesetzt ist, **dadurch gekennzeichnet, dass** das Wärmetauschermodul (1) aus wenigstens zwei Rohrschlangen (2) zusammengesetzt ist, deren aneinander angeschlossene Rohrenden (7) im Bereich eines gemeinsamen Rohrlängsabschnittes (3) über ein Fitting (8) miteinander verbunden sind, das ein Drehlager mit rohrlängsrichtungsparalleler Drehachse (9) für die aneinander angeschlossenen Rohrschlangen (2) bildet.

2. Vorrichtung nach Anspruch 1, **dadurch gekennzeichnet, dass** die Rohrschlangen (2) um die Drehachse (9) des Fittings (8) um zumindest annähernd 180°, insbesondere wenigstens 170 bis 180°, zwischen einer auseinandergebreiteten Montagelage und einer zusammengelegten Transportlage verlagerbar sind.

3. Vorrichtung nach Anspruch 1 oder 2, **dadurch gekennzeichnet, dass** das Fitting (8) zwei je ein Rohrende (7) einer Rohrschlange (2) aufnehmende Anschlussnippel (11) aufweist, wobei auf jeden Anschlussnippel (11) ein Rohrende (7) unter Zwischenlage einer Dichtung (12), insbesondere eines Dichtringes, aufgesetzt ist.

4. Vorrichtung nach einem der Ansprüche 1 bis 3, **dadurch gekennzeichnet, dass** das Fitting (8) zwei je ein Rohrende (7) einer Rohrschlange (2) aufnehmende Anschlussnippel (11) aufweist, wobei die Rohrenden (7) auf den Anschlussnippeln (11) mittels je wenigstens einer Klemmvorrichtung (13) abzugsgesichert sind, die um die zugeordnete Anschlussnippellängsachse frei drehbar im Fitting (8) gelagert ist.

5. Vorrichtung nach Anspruch 3 oder 4, **dadurch gekennzeichnet, dass** jeder Anschlussnippel (11) einen sich gegen das freie Nippelende (14) hin erweiternden Außenkonus (15) aufweist, auf den ein auf den Außenkonus (15) aufschiebbarer, eine Abzugssicherung bildender Spreizring (16) mit nach außen abstehenden Rückhaltekrallen (17) vorgesehen ist.

6. Vorrichtung nach Anspruch 5, **dadurch gekennzeichnet, dass** zwischen dem Spreizring (16) und einem Stützring (18), der sich an einem dem freien Nippelende (14) abgewandten axialen Anschlag (19) des Anschlussnippels (11) abstützt, ist ein gummielastischer Federring (20) angeordnet.

7. Vorrichtung nach einem der Ansprüche 1 bis 6, **dadurch gekennzeichnet, dass** die Halteschienen (6) der aneinander angeschlossenen Rohrschlangen (2) zueinander auf Lücke versetzt angeordnet sind, und dass die einander zugewandten schienenendseitigen Rohraufnahmen (5) der beiden aneinander angeschlossenen Rohrschlangen (2) unter Ausbildung eines Scharniers am Rohrlängsabschnitt (3) mit dem Fitting (8) angreifen.

8. Vorrichtung nach einem der Ansprüche 1 bis 7, **dadurch gekennzeichnet, dass** jede Rohrschlange (2) in wenigstens eine Halteschiene (6) eingesetzt ist, und wenigstens eine Halteschiene (6) einer Rohrschlange (2) mit ihrer endabschnittsseitigen Rohraufnahe (5) unter Ausbildung eines Scharniers am Rohrlängsabschnitt (3) mit dem Fitting (8) angreift, wobei die Halteschienen (6) benachbarter Rohrschlangen (2) zueinander auf Lücke versetzt sind.

9. Vorrichtung nach einem der Ansprüche 1 bis 8, **dadurch gekennzeichnet, dass** jede Rohrschlange (2) in wenigstens eine Halteschiene (6) eingesetzt ist, und wenigstens eine Halteschiene (6) einer Rohrschlange (2) mit ihrer endabschnittsseitigen Rohraufnahe (5) unter Ausbildung eines Scharniers am Rohrlängsabschnitt (3) mit dem Fitting (8) der benachbarten Rohrschlange (2) angreift, wobei die Halteschienen (6) benachbarter Rohrschlangen (2) zueinander auf Lücke versetzt sind.

## Claims

1. Device for air-conditioning a room with a heat exchanger module (1) which comprises at least one meandering pipe coil (2) through which a tempering fluid can flow and which has a plurality of parallel longitudinal pipe sections (3), which are connected via connecting sections (4), the pipe coil (2) being inserted in the region of the longitudinal pipe sections (3) in pipe receptacles (5) of at least one holding profile (6) running transversely to the longitudinal direction of the longitudinal pipe sections (3), **characterized in that** the heat exchanger module (1) is composed of at least two pipe coils (2) whose conjoined pipe ends (7) are connected to one another in the region of a common longitudinal pipe section (3) by means of a fitting (8) which forms a pivot bearing with an axis of rotation (9) parallel to the longitudinal pipe direction for the pipe coils (2) connected to one another.

2. Device according to claim 1, **characterized in that** the pipe coils (2) are displaceable about the axis of rotation (9) of the fitting (8) by at least approximately 180°, in particular at least 170 to 180°, between a spread-apart mounting position and a folded transport position.

3. Device according to claim 1 or 2, **characterized in that** the fitting (8) has two connecting nipples (11) each receiving one pipe end (7) of a pipe coil (2), wherein one pipe end (7) is placed on each connecting nipple (11) with the interposition of a seal (12), in particular a sealing ring.

4. Device according to one of the claims 1 to 3, **characterized in that** the fitting (8) has two connecting nipples (11) each receiving one pipe end (7) of a pipe coil (2), wherein the pipe ends (7) are secured against withdrawal on the connecting nipples (11) by means of at least one clamping device (13) in each case, which clamping device (13) is mounted in the fitting (8) so as to be freely rotatable about the associated connecting nipple longitudinal axis.

5. Device according to claim 3 or 4, **characterized in that** each connecting nipple (11) has an outer cone (15) which widens towards the free nipple end (14) and onto which an expanding ring (16) with outwardly projecting retaining claws (17) is provided, which expanding ring (16) can be pushed onto the outer cone (15) and forms a pull-off safety device.

6. Device according to claim 5, **characterized in that** a rubber-elastic spring ring (20) is arranged between the expanding ring (16) and a support ring (18), which is supported on an axial stop (19) of the connecting nipple (11), the axial stop (19) facing away from the free nipple end (14).

7. Device according to one of the claims 1 to 6, **characterized in that** the holding profiles (6) of the pipe coils (2) connected to one another are arranged offset with respect to one another, and **in that** the facing profile end section-side pipe receptacles (5) of the two joined pipe coils (2) engage with the longitudinal pipe section (3) comprising the fitting (8), forming a hinge.

8. Device according to one of the claims 1 to 7, **characterized in that** each pipe coil (2) is inserted into at least one holding profile (6), and at least one holding profile (6) of a pipe coil (2) engages with its end section-side pipe receptacle (5) with the longitudinal pipe section (3) comprising the fitting (8), forming a hinge, wherein the holding profiles (6) of adjacent pipe coils (2) are offset from one another.

9. Device according to one of the claims 1 to 8, **characterized in that** each pipe coil (2) is inserted into at least one holding profile (6), and at least one holding profile (6) of a pipe coil (2) engages with its end section-side pipe receptacle (5) with the longitudinal pipe section (3) comprising the fitting (8) of the adjacent pipe coil (2), forming a hinge, wherein the holding profiles (6) of adjacent pipe coils (2) are offset from one another to form a gap.

## Revendications

1. Dispositif de climatisation d'une pièce, comprenant un module d'échangeur de chaleur (1), qui comprend au moins un serpentin agencé en formant des méandres (2) qui peut être traversé par un fluide de régulation de température et qui comprend plusieurs sections longitudinales de tube (3) qui s'étendent parallèlement et qui sont reliés par des sections de liaison (4), dans lequel le serpentin (2) est inséré dans la région des sections longitudinales de tube (3) à l'intérieur de logements de tube (5) d'au moins un rail de retenue (6) qui s'étend transversalement à la direction longitudinale des sections longitudinales de tube (3), **caractérisé en ce que** le module d'échangeur de chaleur (1) comprend au moins deux serpentins (2) dont les extrémités de tube (7) raccordées l'une à l'autre sont reliées entre elles dans la région d'une section longitudinale de tube commune (3) par l'intermédiaire d'un raccord (8) qui forme un palier de rotation avec un axe de rotation (9) parallèle à la direction longitudinale du tube pour les serpentins (2) raccordés l'un à l'autre.

2. Dispositif selon la revendication 1, **caractérisé en ce que** les serpentins (2) peuvent être déplacés autour de l'axe de rotation (9) du raccord (8) d'au moins approximativement 180°, en particulier d'au moins 170° à 180°, entre une position de montage déployée et une position de transport repliée.

3. Dispositif selon la revendication 1 ou 2, **caractérisé en ce que** le raccord (8) comporte deux embouts de raccordement (11) qui reçoivent chacun une extrémité de tube (7) d'un serpentin (2), dans lequel une extrémité de tube (7) est montée sur chaque embout de raccordement (11) avec interposition d'un joint d'étanchéité (12), en particulier d'une bague d'étanchéité.

4. Dispositif selon l'une quelconque des revendications 1 à 3, **caractérisé en ce que** le raccord (8) comporte deux embouts de raccordement (11) qui reçoivent chacun une extrémité de tube (7) d'un serpentin (2), dans lequel les extrémités de tube (7) sont calées sur les embouts de raccordement (11) à l'aide d'au moins un dispositif de serrage respectif (13) qui est monté dans le raccord (8) de manière à pouvoir tourner librement autour de l'axe longitudinal associé de l'embout de raccordement.

5. Dispositif selon la revendication 3 ou 4, **caractérisé en ce que** chaque embout de raccordement (11) présente un cône extérieur (15) qui s'élargit en direction de l'extrémité libre (14) de l'embout, dans lequel il est prévu sur le cône une bague d'écartement (16) qui peut être enfilée sur le cône extérieur (15) et qui constitue une sécurité contre le retrait grâce à des griffes de retenue (17) qui font saillie vers l'extérieur.

6. Dispositif selon la revendication 5, **caractérisé en ce qu'**une rondelle élastique possédant ayant l'élasticité du caoutchouc (20) est agencée entre la bague d'écartement (16) et une bague de support (18) qui s'appuie sur une butée axiale (19) de l'embout de raccordement (11) et qui est opposée à l'extrémité libre (14) de l'embout.

7. Dispositif selon l'une quelconque des revendications 1 à 6, **caractérisé en ce que** les rails de retenue (6) des serpentins (2) raccordés l'un à l'autre sont décalés l'un par rapport à l'autre sur un espace, et **en ce que** les logements de tube (5) du côté de l'extrémité de rail, orientés les uns vers les autres, des deux serpentins (2) raccordés l'un à l'autre s'engagent avec le raccord (8) en formant une charnière sur la section longitudinale de tube (3).

8. Dispositif selon l'une quelconque des revendications 1 à 7, **caractérisé en ce que** chaque serpentin (2) est inséré dans au moins un rail de retenue (6), et au moins un rail de retenue (6) d'un serpentin (2) vient en prise avec le raccord (8) par son logement de tube (5) du côté de la section d'extrémité en formant une charnière sur la section longitudinale de tube (3), dans lequel les rails de retenue (6) de serpentins voisins (2) sont décalés les uns par rapport aux autres sur un espace.

9. Dispositif selon l'une quelconque des revendications 1 à 8, **caractérisé en ce que** chaque serpentin (2) est inséré dans au moins un rail de retenue (6), et au moins un rail de retenue (6) d'un serpentin (2) vient en prise avec le raccord (8) du serpentin voisin (2) par son logement de tube (5) du côté de la section d'extrémité en formant une charnière sur la section longitudinale de tube (3), dans lequel les rails de retenue (6) de serpentins voisins (2) sont décalés les uns par rapport aux autres sur un espace.
